# EUROPEAN PATENT APPLICATION

(11) **EP 4 597 186 A1**
(43) Date of publication of application: **06.08.2025**
(21) Application number: 22960590.2
(22) Date of filing: 24.11.2022
(51) Int. Cl.: G02B 6/42

(54) **BOSA DEVICE ASSEMBLING APPARATUS AND MOUNTING METHOD THEREFOR**

(30) Priority: 26.09.2022 CN 202211172550
(71) Applicant: Accelink Technologies Co., Ltd, Wuhan City, Hubei 430074 (CN)
(72) Inventor: LUO, Yaoxin, Wuhan, Hubei 430074 (CN); ZHANG, Xiaoli, Wuhan, Hubei 430074 (CN); SHEN, Xuecheng, Wuhan, Hubei 430074 (CN); HUANG, Hanjie, Wuhan, Hubei 430074 (CN); LI, Changan, Wuhan, Hubei 430074 (CN); QUAN, Benqing, Wuhan, Hubei 430074 (CN)
(74) Representative: Frenkel, Matthias Alexander
(86) International application number: PCT/CN2022/133994
(87) International publication number: WO 2024/065993

(57) **Abstract**

A BOSA device assembling apparatus and a mounting method thereof. The assembling apparatus comprises: a BOSA device (1) including a base and a middle seat (2) including a bottom plate (23), a first limiting arm (21) provided with a first snap-fit hole (211), and a second limiting arm (22) provided with a second snap-fit hole (221), the base comprising a first side surface (11) provided with a first boss (13) and a second side surface (12) provided with a second boss (14), which are oppositely set. The first limiting arm (21) and the second limiting arm (22) being both set on the bottom plate (23) and oppositely set, the bottom plate (23), the first limiting arm (21) and the second limiting arm (22) forming a mounting space. The bottom plate (23) is further provided with at least one protrusion (231) which is set on a side facing away from the first limiting arm (21) and is used to be fixed in a positioning hole (31) of a PCB board. The base is set in the mounting space, and the first boss (13) is snap-fitted in the first snap-fit hole (211), and the second boss (14) is snap-fitted in the second snap-fit hole (221), so as to fix the BOSA device (1) on the middle seat (2).

## Description

### TECHNICAL FIELD OF THE DISCLOSURE

The present disclosure relates to the technical field of optical communication, in particular to a BOSA device assembling apparatus and a mounting method thereof.

### BACKGROUND

The transmitting optical sub-assembly and the receiving optical sub-assembly of the early optical module are independent assemblies, one being a transmitting optical sub-assembly (abbreviated as TOSA), and the other being a receiving optical sub-assembly (abbreviated as ROSA). With the development of optical devices, TOSA and ROSA are combined into one device and become a bi-directional optical sub-assembly (abbreviated as BOSA). BOSA serves as an important component of a single-fiber optical module and is widely applied to optical communication equipment.

In an existing BOSA device installation scheme, one connection mode is to realize connection between BOSA and a pinted crcuit board (abbreviated as PCB) by adopting an intermediate connecting piece. The connecting piece is generally made of powder metallurgy, and its cost is comparatively high. The connecting piece needs to be connected with the BOSA square pipe body through viscose, and after the viscose is glued, the connecting piece also needs to enter the oven for baking and curing. The whole viscose process and the curing process is relatively complicated, requiring a long time, and the problem of alignment deflection is easy to occur in the viscose process.

In view of the above, overcoming the defect existing in the present prior art is an urgent problem to be solved in this technical field.

### SUMMARY

Aiming at the above defects or improvement requirements of the prior art, the present disclosure provides a BOSA device assembling apparatus, with the aim of improving the technical problem of fixing the BOSA on the PCB, and overcoming the problem in the prior art in using the viscose connection mode, i.e. the whole viscose and curing process is relatively complicated, requiring a long time, and the alignment deflection is easy to occur in the viscose process.

In order to realize the above-mentioned purpose, a first aspect of the present disclosure provides a BOSA device assembling apparatus, which comprises a BOSA device and a middle seat,
wherein the base comprises a first side surface and a second side surface which are oppositely set, a first boss is set on the first side surface, and a second boss is set on the second side surface;
wherein the middle seat comprises a bottom plate, a first limiting arm, and a second limiting arm, the first limiting arm and the second limiting arm are both set on the bottom plate and are oppositely set, the bottom plate, the first limiting arm, and the second limiting arm form a mounting space, wherein a first snap-fit hole is set on the first limiting arm, and a second snap-fit hole is set on the second limiting arm;
the bottom plate is futher provided with at least one protruding pin which is set on a side facing away from the first limiting arm; the PCB board is provided with at least one positioning hole, in which the protruding pin is used to be fixed, so as to fix the middle seat on the PCB board; and
the base is set in the mounting space, the first boss is snap-fitted to the first snap-fit hole, and the second boss is snap-fitted to the second snap-fit hole, so as to fix the BOSA device on the middle seat.

Further, the first side surface is provided with the two first bosses and a first groove, and the two first bosses are provided in the first bosses and are respectively set at two ends of the first groove; the second side surface is provided with a second groove, and the second boss is set within the second groove and is set in a middle area of the second groove; a length of the second boss is greater than a length of the first boss.

Further, the middle seat comprises two first limiting arms and one second limiting arm, the two first limiting arms being set on the same side and being set at two ends of the bottom plate,and the second limiting arm being set in a middle area of the bottom plate.

Further, a first notch and a second notch are set on the bottom plate, wherein the first notch is set adjacent to the first limiting arm, and a length of the first notch is greater than a length of the first limiting arm; and the second notch is set adjacent to the second limiting arm, and a length of the second notch is greater than a length of the second limiting arm.

Further, the assembling apparatus is further set with a disassembling and returning member in a matching mode, which comprises an operating arm and a disassembling arm, and the disassembling arm is provided with a disassembling groove used to couple with the first limiting arm and a movable portion inserted into the first notch;
when the operating arm receives an external force, the disassembling groove abuts against a side surface of the first limiting arm, and the movable portion moves in the first notch, so that the first boss is separated from the corresponding first snap-fit hole.

Further, a protrusion is set between the disassembling groove and the movable portion;
wherein the disassembling arm is provided with a first cambered surface, a second cambered surface and a third cambered surface, the first cambered surface being connected to the second cambered surface to form the disassembling groove, and the second cambered surface and the third cambered surface being connected with each other to form the protrusion; and
the second cambered surface is inclined to a plane where the movable portion is located, and an angle between the first cambered surface and the second cambered surface is 80°~120°.

Further, the first boss and the second boss each have an abutting surface being parallel to an upper surface of the base and a guide surface being inclined to the abutting surface, and in a direction close to the middle seat, a distance between the guide surface and the base is gradually reduced.

Further, a first inclined surface is set on the first limiting arm, located on an inner side of the first limiting arm, and is set above the first snap-fit hole;
a second inclined surface is set on the second limiting arm, located on an inner side of the second limiting arm, and is set above the second snap-fit hole.

Further, a number of the protruding pins is three, and correspondingly, a number of the positioning hole is also three; and the protruding pin is an elongated strip-shaped protruding pin, and the positioning hole is a circular hole.

Further, the BOSA device comprises a transmitting optical sub-assembly and a receiving optical sub-assembly, both of which are set on different surfaces of the base;
the assembling apparatus further comprises an FPC board, and the FPC board is provided with at least three mounting portions, two of which are respectively connected with the transmitting optical sub-assembly and the receiving optical sub-assembly, and the other of which is connected with the PCB.

In a second aspect, the present disclosure further provides a mounting method of a BOSA device assembling apparatus. The mounting method is applied to the assembling apparatus according to the above-mentioned first aspect, and comprises:
fixing the middle seat on the PCB board;
snap-fitting the first boss on the BOSA device in the first snap-fit hole, and snap-fitting the second boss on the BOSA device in the second snap-fit hole, so as to fix the BOSA device on the middle seat.
the BOSA device has already been welded with the FPC board before the middle seat is fixed, or, the BOSA device completes the welding with the FPC board after the middle seat is fixed.

In a third aspect, the present disclosure further provides a mounting method of a BOSA device assembling apparatus. The mounting method is applied to the BOSA device assembling apparatus according to the above-mentioned first aspect, and the mounting method comprises:
snap-fitting the first boss on the BOSA device in the first snap-fit hole, and snap-fitting the second boss on the BOSA device in the second snap-fit hole, so as to fix the BOSA device on the middle seat;
fixing the middle seat on the PCB board;
wherein the BOSA device has already been welded with the FPC board before the middle seat is fixed, or, the BOSA device completes the welding with the FPC board after the middle seat is fixed.

Compared with the prior art, the beneficial effects of embodiments of the present disclosure are as follows:
The present disclosure provides a BOSA device assembling apparatus and a mounting method thereof. The assembling apparatus comprises a BOSA device, a middle seat and a PCB board, through setting a first boss on the first side surface of the BOSA device, a second boss on the second side surface of the BOSA device, and oppositely setting a first limiting arm and a second limiting arm on the middle seat, the first limiting arm and the second limiting arm form a mounting space with the middle seat, in which the BOSA device base is set, and the first boss is snap-fitted to the first snap-fit hole, and the second boss is snap-fitted to the second snap-fit hole, so as to fix the BOSA device on the middle seat. At least one protruding pin is further set on the bottom plate and is set on the side facing away from the first limiting arm; at least one positioning hole is set on the PCB board, and the protruding pin is fixed in the positioning hole, so as to fix the middle seat on the PCB board. In the present disclosure, a protruding pin is set on the middle seat, and a middle seat is fixed on a PCB board through the cooperation of the protruding pin and the positioning hole; a boss is set on a BOSA device, and a snap-fit hole is set on a middle seat; through the cooperation of the boss and the snap-fit hole, the BOSA device is fixed on the middle seat, which can avoid the occurrence of a situation of alignment deflection. In addition, such fixing mode does not need to be connected through viscose, without being baked and cured, and the mounting mode is simple, whereby rapid mounting can be achieved, and the purpose of quickly, accurately, and firmly fixing the BOSA device on the PCB board can be achieved.

### BRIEF DESCRIPTION OF THE DRAWINGS

In order to more clearly explain embodiments of the present disclosure or the technical solutions in the prior art, the drawings required in the embodiments or the description of the prior art are briefly introduced in the followings. Obviously, the drawings in the following description are some embodiments of the present disclosure, and for those skilled in the art, other drawings may be obtained according to these drawings without any inventive labor.
FIG. 1 is an exploded schematic structural diagram of a BOSA device assembling apparatus according to an embodiment of the present disclosure.
FIG. 2 is a schematic overall structural diagram of a BOSA device assembling apparatus according to an embodiment of the present disclosure.
FIG. 3 is a schematic structural diagram of a middle seat of a BOSA device assembling apparatus according to an embodiment of the present disclosure.
FIG. 4 is a schematic structural diagram of a PCB board adapted to a BOSA device assembling apparatus according to an embodiment of the present disclosure.
FIG. 5 is a schematic structural diagram of an FPC board adapted to a BOSA device assembling apparatus according to an embodiment of the present disclosure.
FIG. 6 is a schematic structural diagram of a BOSA device of a BOSA device assembling apparatus according to an embodiment of the present disclosure.
FIG. 7 is a schematic structural diagram, in another view, of a BOSA device of a BOSA device assembling apparatus according to an embodiment of the present disclosure.
FIG. 8 is a schematic overall structural diagram of a BOSA device assembling apparatus (with a disassembling and returning member) according to an embodiment of the present disclosure.
FIG. 9 is a schematic structural side diagram of a BOSA device assembling apparatus (with a disassembling and returning member) according to an embodiment of the present disclosure.
FIG. 10 is a schematic structural diagram of a disassembling and returning member of a BOSA device assembling apparatus according to an embodiment of the present disclosure.
FIG. 11 is a schematic structural side diagram of a disassembling and returning member of a BOSA device assembling apparatus according to an embodiment of the present disclosure.
FIG. 12 is a schematic structural diagram of a bump according to an embodiment of the present disclosure.

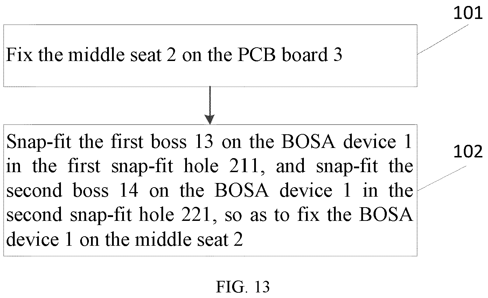

FIG. 13 is a schematic diagram of an installation process of a BOSA device assembling apparatus according to an embodiment of the present disclosure.

The list of Reference Signs are as follows:
BOSA device 1
First side surface 11
Second side surface 12
First boss 13
Second boss 14
Abutting surface 141
Guide surface 142
First groove 15
Second groove 16
Middle seat 2
First limiting arm 21
First snap-fit hole 211
First inclined surface 212
Second limiting arm 22
Second snap-fit hole 221
Bottom plate 23
Protruding pin 231
First notch 232
Second notch 233
PCB board 3
Positioning hole 31
FPC board 4
Mounting portion 41
Disassembling and returning member 5
Disassembling arm 51
Disassembling groove 511
Movable portion 512
Protrusion 513
First cambered surface 514
Second cambered surface 514
Third cambered surface 516
Operating arm 52

### DETAILED DESCRIPTION

In order to make the objectives, technical solutions and advantages of the present disclosure clearer, the present disclosure will be further described in detail below with reference to the drawings and embodiments. It should be understood that the specific embodiments described herein are only used to explain the present disclosure and are not intended to limit the present disclosure.

In the description of the present disclosure, the orientation or position relationship indicated by the terms "inner", "outer", "longitudinal", "lateral", "upper", "lower", "top", "bottom" and the like is based on the orientation or positional relationship shown in the drawings, which is only for the purpose of describing the present disclosure rather than requiring the present disclosure must be constructed and operated in a specific orientation, and which should not be understood as a limitation to the present disclosure.

In the present disclosure, unless otherwise definitely specified and limited, that the first feature is "above" or "below" the second feature may include that the first feature and the second feature are directly in contact with each other, and may also include that the first feature and the second feature are in contact through another feature between the first feature and the second feature rather than being directly in contact with each other. Moreover, the first feature being "above", "over" and "on" the second feature include that the first feature is right above and obliquely above the second feature, or merely indicate that the horizontal height of the first feature is higher than that of the second feature. The first feature being "under", "below" and "beneath" the second feature include that the first feature is right below and obliquely below the second feature, or only merely indicate that the horizontal height of the first feature is less than that of the second feature.

### Embodiment 1

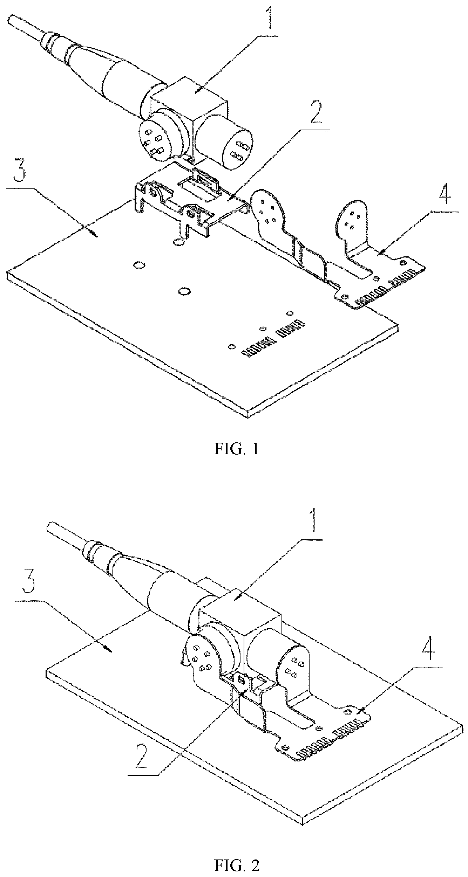

Embodiment 1 of the present disclosure provides a BOSA device assembling apparatus. As shown in Figs. 1-8, the assembling device comprises a BOSA device 1, a PCB board 3 and a middle seat 2.

The BOSA device 1 comprises a base (not shown in the drawings). The base comprises a first side surface 11 and a second side surface 12 which are oppositely set. A first boss 13 is set on the first side surface 11, and a second boss 14 is set on the second side surface 12.

The middle seat 2 comprises a bottom plate 23, a first limiting arm 21, and a second limiting arm 22. The first limiting arm 21 and the second limiting arm 22 are both set on the bottom plate 23, and the first limiting arm 21 and the second limiting arm 22 are oppositely set. The bottom plate 23, the first limiting arm 21, and the second limiting arm 22 form a mounting space, wherein a first snap-fit hole 211 is set on the first limiting arm 21, and a second snap-fit hole 221 is set on the second limiting arm 22.

Further, at least one protruding pin 231 is set on the bottom plate 23, and the protruding pin 231 is set on a side facing away from the first limiting arm 21. At least one positioning hole 31 is set on the PCB board 3, and the protruding pin 231 is fixed in the positioning hole 31, so as to fix the middle seat 2 on the PCB board 3.

The base is set in the mounting space; the first boss 13 is snap-fitted to the first snap-fit hole 211, and the second boss 14 is snap-fitted to the second snap-fit hole 221, so as to fix the BOSA device 1 on the middle seat 2.

In the present embodiment, through setting the first limiting arm 21 and the second limiting arm 22 on the middle seat 2, the first limiting arm 21 and the second limiting arm 22 form a mounting space with the bottom plate 23 of the middle seat 2, the mounting space is used for accommodating the BOSA device 1; through setting a first boss 13 and a second boss 14 on the BOSA device 1, a corresponding first snap-fit hole 211 on the first limiting arm 21, and a corresponding second snap-fit hole 221 on the second limiting arm 22, when the BOSA device 1 is mounted on the middle seat 2, the first boss 13 enters the first snap-fit hole 211 and the second boss 14 enters the second snap-fit hole 221, so as to achieve the purpose of fixing the BOSA device 1 on the middle seat 2; through further setting a protruding pin 231 on the middle seat 2 and a corresponding positioning hole 31 on the PCB board 3, the protruding pin 231 enters the positioning hole 31, then the middle seat 2 is fixed on the PCB board 3, and finally the purpose of fixing the BOSA device 1 on the PCB board 3 is achieved.

In the present embodiment, the middle seat 2 is fixed on the PCB board 3 through the cooperation of the protruding pin 231 and the positioning hole 31; through the cooperation of the boss and the snap-fit hole, the BOSA device 1 is fixed on the middle seat 2, which can avoid the occurrence of the situation of alignment deflection. In addition, such fixing mode does not need to be connected through viscose, without baking and curing, and the mounting mode is simple, whereby rapid mounting can be achieved, and the purpose of quickly, accurately, and firmly fixing the BOSA device 1 on the PCB board 3 can be achieved.

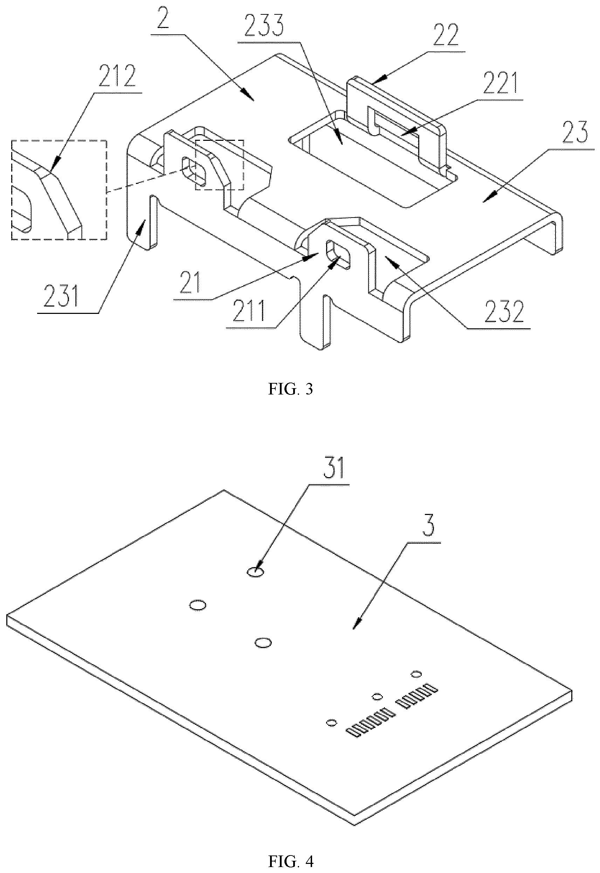

In order to better realize the fixation of the middle seat 2 and the PCB board 3, a preferred implementation also exists in combination with the embodiment of the present disclosure. Specifically, as shown in FIG. 3 and FIG. 4, the number of the protruding pin 231 is three, and correspondingly, the number of the positioning hole 31 is also three, moreover, the protruding pin 231 is an elongated strip-shaped protruding pin 231, and the positioning hole 31 is a circular hole.

The protruding pin 231 is a construction of an elongated strip-shaped protruding pin, which is consistent with the plate-shaped construction of the bottom plate 23, and the three protruding pin 231 can stably fix the middle seat 2 on the PCB board 3. Compared with the setting of one to two protruding pins 231, the reliability is high; compared with the setting of more than three protruding pins 231, the mounting process can be made convenient, and materials are saved. The positioning hole 31 is a circular hole, so that the protruding pin 231 is better positioned when entering the positioning hole 31, and the protruding feet 231 and the positioning hole 31 do not need to be fit smoothly, so that the middle seat 2 and the PCB board 3 are connected more quickly.

In an optional solution, the protruding pin 231 may be cylindrical, and at this time, the positioning of the middle seat 2 can be realized only when the number of the protruding pin 231 is at least two. If the protruding pin 231 is in other shapes, and when the shape of the positioning hole 31 is corresponding to the protruding pin 231, the positioning can be realized if the number of the protruding pin 231 is one or more than one.

In an actual application scene, in order to improve the stability between the middle seat and the PCB board, after the protruding pin passes through the PCB board, the protruding pin is welded to the PCB board by using a welding process, and other process can also be used to strengthen the connection between the middle seat and the PCB board.

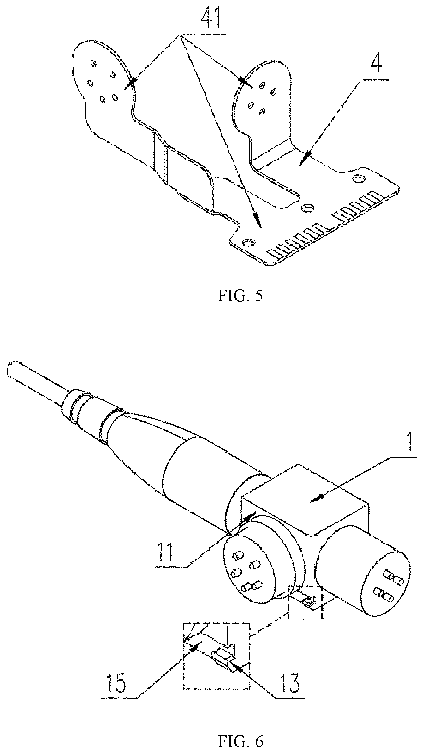

In order to better realize the fixation of the BOSA device 1 and the middle seat 2, a preferred implementation also exists in combination with the embodiment of the present disclosure. Specifically, as shown in FIG. 6 to FIG. 7, two first bosses 13 are set on the first side surface 11; a first groove 15 is set on the first side surface 11, and the two first boss 13 are set within the first groove 15, and are respectively set at two ends of the first groove 15; a second groove 16 is set on the first side surface 12, the second boss 14 is set within the second groove 16, and is set in a middle area of the second groove 16; and a length of the second boss 14 is greater than a length of the first boss 13.

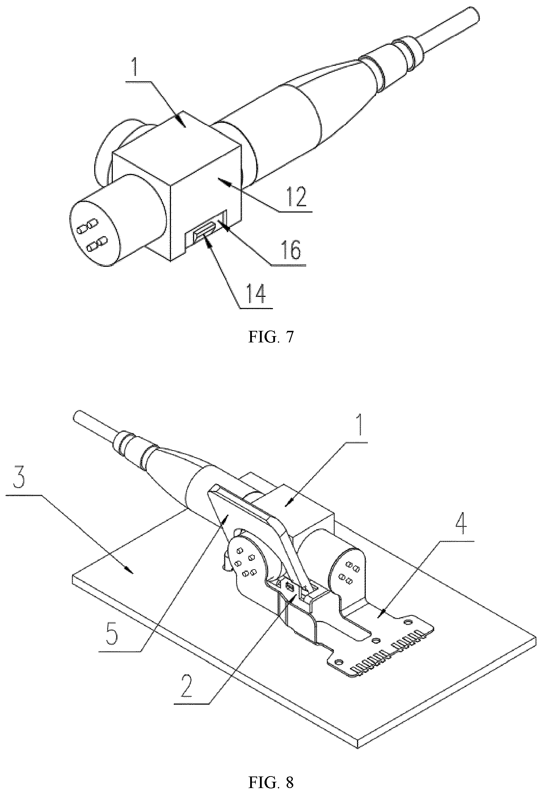

As shown in FIG. 6, the position of the first side surface 11 is an orientation surface of the detector set in the BOSA device 1, and correspondingly, the position of the second side surface 12, as shown in FIG. 7, is an empty surface. As a result, the advantage is that it ensures the fixed effect of the three-point lock catch even with the minimum change to the housing of the BOSA device 1 in the design of the fixed structure of the middle seat 2 and the BOSA device 1. Moreover, the reason why the first side surface 11 and the second side surface 12 of the above-mentioned orientation feature are selected is to consider that the size of the notch of the corresponding second snap-fit hole 221 can be larger than that of the first snap-fit hole 211 and be flat, and thus, in the process of mounting, the second snap-fit hole 221 may be firstly snapped onto the second boss 14, then from the visual angle shown in FIG. 1, the first snap-fit hole 211 may be snapped onto the first boss 13 by a clockwise twisting motion, whereby the mounting is more convenient and efficient.

The first groove 15 is a groove, close to the edge, at the bottom end of the first side surface 11. Specifically, as shown in FIG. 6, the first groove 15 is set at a top angle of the base of the BOSA device 1, and the first boss 13 is a boss set at the edge of the first groove 15 and is also set at the top angle of the base of the BOSA device 1, so that the two faces of the first boss 13 within the first groove 15 keep a certain distance from the two opposite faces of the first groove 15, so that the first boss 13 is able to enter the first snap-fit hole 211 in the first limiting arm 21; as shown in FIG. 7, the second groove 16 is a groove set in the middle part of the bottom end of the second side surface 12, and the second boss 14 is a boss set in the middle of the second groove 16, so as to make the three faces of the second boss 14 and the three sidewalls of the second groove 16 be kept at a certain distance, so that the second boss 14 may enter the second snap-fit hole 221.

Matching with this, as shown in FIG. 3, the middle seat 2 comprises two first limiting arms 21 and one second limiting arm 22, the two first limiting arms 21 being set on the same side and being set at two ends of the bottom plate 23, and the second limiting arm 22 is set in the middle area of the bottom plate 23. It can be understood that the two first limiting arms 21 and one second limiting arm 22 are distributed in a triangular shape, and through cooperation of the two first limiting arms 21 and the second limiting arm 22, the BOSA device 1 may be reliably fixed to the middle seat 2.

Meanwhile, the first limiting arms 21 and the first side surface 11 are located on the same side, and when the BOSA device 1 is fixed on the middle seat 2, a top surface of the first limiting arm 21 is in contact with a top surface of the first groove 15, so that the BOSA device 1 may be arranged on the middle seat 2 more stably; when the BOSA device 1 is fixed on the middle seat 2, a part of the first limiting arm 21 is located outside the first groove 15, and at this time, as shown in FIG. 8, in the axial direction of the BOSA device 1, a part of the first limiting arm 21 is located outside the first groove 15.

The second limiting arm 22 and the second side surface 12 are located on the same side, and a size of the second limiting arm 22 is adapted to the second groove 16 to enable the second groove 16 to be filled by the second limiting arm 22, so that the second limiting arm 22 may be completely accommodated in the second groove 16. When the second boss 14 enters the second snap-fit hole 221, and the second limiting arm 22 fills the second groove 16, the limiting of the BOSA device 1 is enhanced on the side of the second limiting arm 22, so that the BOSA device 1 is better fixed on the middle seat 2.

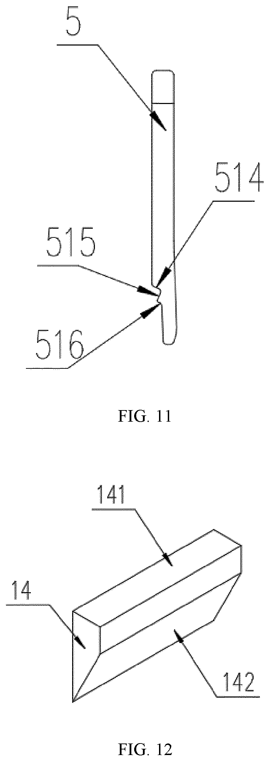

In order to realize the guidance in the fixing process of the BOSA device 1 and the middle seat 2, a preferred implementation also exists in combination with the embodiment of the present disclosure. Specifically, as shown in FIGS. 6, 7 and 12, the first boss 13 and the second boss 14 each have an abutting surface 141 and a guide surface 142. The abutting surface 141 is parallel to an upper surface of the base and is used for abutting a top surface of the first groove 15 or the second groove 16. The guide surface 142 is inclined to the abutting surface 141, and in a direction close to the middle seat 2, a distance between the guide surface 142 and the base is gradually reduced, which plays a guiding function when the first limiting arm 21 and the second limiting arm 22 enter the first groove 15 or the second groove 16. It should be noted that the second boss 14 and the first boss 13 have the same structure and are only different in size; here, only the structures of the first and second bosses are shown in FIG. 12, and are not separately shown.

In order to realize the guidance in the fixing process of the BOSA device 1 and the middle seat 2, a preferred implementation also exists in combination with the embodiment of the present disclosure. Specifically, as shown in FIG. 3, a first inclined surface 212 is set on the first limiting arm 21, located on an inner side of the first limiting arm 21, and is set above the first snap-fit hole 211; the second inclined surface is set on the second limiting arm 22 (not shown in the drawings), located on an inner side of the second limiting arm 22, and is set above the second snap-fit hole 221.

Through the cooperation of the first inclined surface 212 and the guide surface 142 on the first boss 13, the first boss 13 may enter the first snap-fit hole 211 more easily; and through the cooperation of the second inclined surface and the guide surface 142 on the second boss 14, the second boss 14 may enter the second snap-fit hole 221 more quickly. In general, the BOSA device 1 may be more easily mounted on the middle seat 2 through the mutual cooperation of the two inclined surfaces. It should be noted that only the first inclined surface 212 is shown in FIG. 3, and in fact, the second inclined surface and the first inclined surface 212 shown in FIG. 3 are consistent in structure and are only different in size. Moreover, the ingenuity of the design here in the present disclosure is also in that, according to circumstances, the first inclined surface 212 also provides a cylindrical notch on the BOSA device 1 for setting the optical device (which may be a detector and may also be a laser, such as in the form of a TO package).

In order to realize circuit signal connection between the BOSA device 1 and the PCB board 3, a preferred implementation also exists in combination with the embodiment of the present disclosure. As shown in FIGS. 1, 2 and 5, the assembling apparatus further comprises an FPC board 4, on which at least three mounting portions 41 are set; the BOSA device 1 comprises a transmitting optical sub-assembly and a receiving optical sub-assembly, both of which are set on different surfaces of the base; and the two mounting portions 41 on the FPC are respectively connected with the transmitting optical sub-assembly and the receiving optical sub-assembly, and the other mounting portion 41 is connected with the PCB.

Specifically, the transmitting optical sub-assembly and the receiving optical sub-assembly on the BOSA device 1 are respectively welded with different mounting portions 41 on the FPC board 4, and a positioning welding pad and a signal welding pad are set on one mounting portion 41 of the FPC board 4, a corresponding positioning welding pad and a corresponding signal welding pad being set on the PCB board 3; after the FPC board 4 and the PCB board 3 are positioned through the positioning welding pad, then the signal welding pad is welded, and furthermore the circuit signal connection of the FPC board 4 and the PCB board 3 is realized.

A preferred implementation also exists in combination with the embodiment of the present disclosure. Specifically, as shown in FIG. 3, a first notch 232 and a second notch 233 are set on the bottom plate 23, wherein the first notch 232 is set adjacent to the first limiting arm 21, and a length of the first notch 232 is greater than a length of the first limiting arm 21; and the second notch 233 is set adjacent to the second limiting arm 22, and a length of the second notch 233 is greater than a length of the second limiting arm 22. The notch may provide a heat dissipation channel for the BOSA device 1 so as to achieve a better heat dissipation effect.

Furthermore, the BOSA device 1 may be separated from the middle seat 2 through the first notch 232. Specifically, in order to realize the disassembly of the BOSA device 1 on the middle seat 2, a preferred implementation also exists in combination with the embodiment of the present disclosure. As shown in FIGS. 8 to 11, the assembling apparatus is further set with a disassembling and returning member 5 in a matching mode, and the disassembling and returning member 5 comprises an operating arm 52 and two oppositely set disassembling arms 51, the operating arm 52 making the two disassembling arms 51 be connected with each other to form the disassembling and returning member 5; a disassembling groove 511 and a movable portion 512 are set on the disassembling arm 51, and on the disassembling arm 51, a front end of the disassembling groove 511 is the movable portion 512.

As shown in FIG. 8, the disassembling groove 511 is used for being coupled with the first limiting arm 21. Specifically, along an axial direction of the BOSA device 1, a portion of the first limiting arm 21 is located outside the first groove 15, the disassembling groove 511 being just abutted against an excess portion of the first limiting arm 21, and the movable portion 512 is inserted into the first notch 232. When the disassembling and returning member 5 is set on the middle seat 2, the disassembling groove 511 causes the disassembling and returning member 5 not to be easily dislocated and come out, and meanwhile, the disassembling groove 511 is also used as a contact point between the middle seat 2 and the disassembling and returning member 5, and plays a role of transmitting force in a process of disassembling the BOSA device 1. When the operating arm 52 receives an external force, the disassembling groove 511 abuts against a side surface of the first limiting arm 21, and the movable portion 512 moves in the first notch 232, and then an external force is applied to the first limiting arm 21 through the disassembling groove 511, so that the first boss 13 is separated from the corresponding first snap-fit hole 211.

In an optional solution, the disassembling and returning member 5 may have only one such disassembling arm 51, and in a case of having only one such first limiting arm 21, the disassembly of the BOSA device on the middle seat 2 may be realized, or in a case of having a plurality of the first limiting arms 21, a plurality of the disassembling and returning member 5 are set to realize the disassembly of the BOSA device on the middle seat 2.

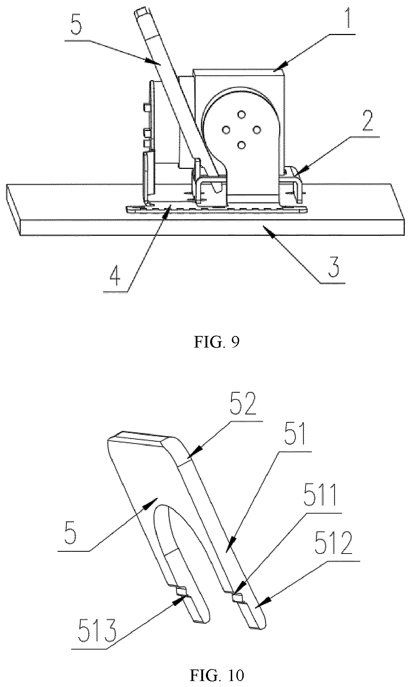

In order to better realize the disassembly of the BOSA device 1 on the middle seat 2, a preferred implementation also exists in combination with the embodiment of the present disclosure. Specifically, as shown in FIGS. 10 to 11, a protrusion 513 is set between the disassembling groove 511 and the movable portion 512. A first cambered surface 514, a second cambered surface 515 and a third cambered surface 516 are set on the disassembling arm 51, and the first cambered surface 514 is connected to the second cambered surface 515 to form the disassembling groove 511; the second cambered surface 515 and the third cambered surface 516 are connected with each other to form the protrusion 513; the second cambered surface 515 is inclined to a plane where the movable portion 512 is located, and an angle between the first cambered surface 514 and the second cambered surface 515 is 80°~120°. In a preferred embodiment, the angle between the first cambered surface 514 and the second cambered surface 515 is close to 90°, so that the disassembling groove 511 is erected on the first limiting arm 21. This structure may use a thickness of the disassembling and returning member 5 to provide a larger active space for the movable portion 512 in a certain notch.

The ingenuity of the disassembly solution composed of the disassembling and returning member 5 present by the present disclosure is reflected in that, in the optimal solution shown in FIGS. 1 to 9, the size of the gap between the two movable portions 512 in the corresponding disassembling and returning member 5 is exactly the same as the size of the gap between the first side surface 11 and the second side surface 12, so that the optical device mounting notch on the first side surface 11 may be used as the fulcrum when the disassembling and returning member 5 is disassembled. Taking the view angle shown in FIG. 9 as an example, in the initial insertion state shown in FIG. 9, as long as the corresponding disassembling and returning member 5 is drawn to the right in the clockwise direction, the corresponding pair of first limiting arms 21 located on the first side face 11 are upwarped and separated from their respective first bosses 13, and further because the fulcrum of the corresponding optical device mounting notch (round shape) to the disassembling and returning member 5 is located in the third quadrant as shown in FIG. 9, the acting force being formed directly towards the lower left angle in FIG. 9 may be provided to the first limiting arm 21, so that the stripping operation of the BOSA device 1 and the middle seat 2 may be completed very smoothly.

In a process of introducing the disassembling and returning member 5, the ingenuity of the idea of the middle seat 2 designed by the present disclosure and the detachable returning part 5 matched with the middle seat 2 is also reflected. With reference to FIG. 3, a pair of first bosses 13 is manufactured on the first side surface 11 where the optical device mounting notch is located, and a pair of first limiting arms 21 is manufactured on the middle seat 2 for completing fixation with a corresponding pair of first bosses 13. At this moment, the present disclosure, through a laser cutting and forming mode on a complete steel plate, makes a cutting groove (which is described as the first notch 232 in the embodiment of the present disclosure) left in the middle seat 2 in a process of manufacturing the first limiting arm 21 is just used as a landing point of the movable portion 512 of the disassembling and returning member 5 (here, in the present embodiment of the present disclosure, in order to comfortably complete the disassembly, the length of the corresponding movable portion 512 is not suitable to be too short, and moreover, in the process of disassembly, the advantage of partially penetrating into and passing through the cutting groove is also that, in the process of stripping, by means of the position limitation to the movable portion 512 by the cutting groove, the unsuitable deformation of the first limiting arm 21 caused by excessive force of an operator may also be prevented), and the significance of correspondingly making the first boss 13 on the corner of the BOSA device 1 is also highlighted at this time. Just due to this, the cutting groove that is left when making the first limiting arm 21, after the BOSA device 1 is mounted on the middle seat 2, may still make the movable portion 512 smoothly have a placement space on the middle seat 2 in a case where no deliberate reprocessing is needed.

Furthermore, the profound meaning of the design of the disassembling groove 511 and the protrusion 513 also needs to be emphatically elaborated; the disassembling groove 511 enables the movable portion to be smoothly inserted into the cutting groove left on the middle seat 2 in the process of manufacturing the first limiting arm 21, and because it is an oblique insertion process, an upper side surface (described in the orientation shown in FIG. 9) of the corresponding disassembling groove 511 may enable the disassembling and returning member 5 to be naturally put on the first limiting arm 21 through the upper side surface of the disassembling groove 511 after the disassembling and returning member 5 is inserted into the cutting groove; and the protrusion 513 makes the acting force be more effectively transmitted to the first limiting arm 21 during the disassembly, so that the disassembly work is completed more efficiently.

### Embodiment 2

Based on the foregoing BOSA device assembling apparatus of Embodiment 1, the present embodiment provides a mounting method of the BOSA device assembling apparatus. The mounting method is applied to the foregoing assembling apparatus as described in Embodiment 1, and the mounting method comprises:
Step 101: fixing the middle seat 2 on the PCB board 3;
Step 102: snap-fitting the first boss 13 on the BOSA device 1 in the first snap-fit hole 211, and snap-fitting the second boss 14 on the BOSA device 1 in the second snap-fit hole 221, so as to fix the BOSA device 1 on the middle seat 2.
The BOSA device 1 has already been welded with the FPC board before the middle seat 2 is fixed, and alternatively, the BOSA device 1 completes the welding with the FPC board after the middle seat 2 is fixed.

Please refer to the foregoing Embodiment 1 for the specific structure of the BOSA device assembling apparatus, and details are not described herein again.

Specifically, in the actual use process, for the combined mounting of the BOSA device assembling apparatus, the Step 101 to Step 102 can also be specifically extended into the following step process:
Step 201: fixing the middle seat 2 on the PCB board 3 after the protruding pin 231 passes through the positioning hole 31.

Step 202: snap-fitting the first boss 13 on the BOSA device 1 in the first snap-fit hole 211, to make the first limiting arm 21 partially enter the first groove 15, and snap-fitting the second boss 14 on the BOSA device 1 in the second snap-fit hole 221, to make the second groove 16 be filled by the second limiting arm 22, so as to fix the BOSA device 1 on the middle seat 2.

Step 203: respectively welding two mounting portions 41 of the FPC board 4 with the transmitting optical sub-assembly and the receiving optical sub-assembly of the BOSA device 1.

Step 204: welding the positioning welding pad on the FPC board 4 with the positioning welding pad on the PCB board 3, and welding a signal welding pad on the FPC board 4 with a corresponding signal welding pad on the PCB board 3.

The above four steps are set in any order, which may all realize the assembly of the BOSA device 1 and the PCB board 3.

For example, it may also be executed according to the following order of steps:
Step 301: respectively welding two mounting portions 41 of the FPC board 4 with the transmitting optical sub-assembly and the receiving optical sub-assembly on the BOSA device 1.

Step 302: snap-fitting the first boss 13 on the BOSA device 1 in the first snap-fit hole 211, to make the first limiting arm 21 partially enter the first groove 15, and snap-fitting the second boss 14 on the BOSA device 1 in the second snap-fit hole 221, to make the second groove 16 be filled by the second limiting arm 22, so as to fix the BOSA device 1 on the middle seat 2.

Step 303: fixing the middle seat 2 on the PCB board 3 after the protruding pin 231 passes through the positioning hole 31.

Step 304: welding the positioning welding pad on the FPC board 4 with the positioning welding pad on the PCB board 3, and welding a signal welding pad on the FPC board 4 with a corresponding signal welding pad on the PCB board 3.

The above-mentioned Step 301 to Step 304 show a completely different sales mode compared with Step 201 to Step 204. Although purely from the perspective of the content, it is only a difference in the order of steps, but the corresponding commercial meaning is hidden within it. Step 301 to Step 302 may be the process steps of the seller who put forward the product in the present disclosure, and the corresponding Step 303 to Step 304 are the process procedure of the manufacturer who purchased the BOSA device product which is under the assembling apparatus proposed by the present disclosure; that is, Step 301 to Step 302 and Step 303 to Step 304 are actually the processes respectively processed in two factories. Comparatively speaking, the above-mentioned Step 201 to Step 204 can be understood as a method flow in which all of Step 201 to Step 204 related to mounting in the same factory.

In addition, the extension process of the method process of the present disclosure may also be expressed as the following order of steps:
Step 401: snap-fitting the first boss 13 on the BOSA device 1 in the first snap-fit hole 211 to make the first limiting arm 21 partially enter the first groove 15, and snap-fitting the second boss 14 on the BOSA device 1 in the second snap-fit hole 221 to make the second groove 16 be filled by the second limiting arm 22, so as to fix the BOSA device 1 on the middle seat 2.

Step 402: fixing the middle seat 2 on the PCB board 3 after the protruding pin 231 passes through the positioning hole 31.

Step 403: respectively welding two mounting portions 41 of the FPC board 4 with the transmitting optical sub-assembly and the receiving optical sub-assembly of the BOSA device 1.

Step 404: welding the positioning welding pad on the FPC board 4 with the positioning welding pad on the PCB board 3, and welding a signal welding pad on the FPC board 4 with a corresponding signal welding pad on the PCB board 3.

Alternatively, the extension process of the method process of the present disclosure may also be expressed as the following order of steps:
Step 501: snap-fitting the first boss 13 on the BOSA device 1 in the first snap-fit hole 211 to make the first limiting arm 21 partially enter the first groove 15, and snap-fitting the second boss 14 on the BOSA device 1 in the second snap-fit hole 221 to make the second groove 16 be filled by the second limiting arm 22, so as to fix the BOSA device 1 on the middle seat 2.

Step 502: respectively welding two mounting portions 41 of the FPC board 4 with the transmitting optical sub-assembly and the receiving optical sub-assembly of the BOSA device 1.

Step 503: fixing the middle seat 2 on the PCB board 3 after the protruding pin 231 passes through the positioning hole 31.

Step 504: welding the positioning welding pad on the FPC board 4 with the positioning welding pad on the PCB board 3, and welding a signal welding pad on the FPC board 4 with a corresponding signal welding pad on the PCB board 3.

Correspondingly, regarding the differences between the mounting steps in detail of the Step 401 to Step 404 and Step 501 to Step 504, the specific explanation to it will not be performed, and in more of the actual situation, more reasonable adjustment and application may be carried out according to the adaptation degree of the processing production line of each manufacturer.

In the present embodiment, the protruding pin 231 is set on the middle seat, and the middle seat 2 is fixed on the PCB board 3 through the cooperation of the protruding pin 231 and the positioning hole 31, the boss is set on the BOSA device 1; the snap-fit hole is set on the middle seat 2, and through the cooperation of the boss and the snap-fit hole, the BOSA device 1 is fixed on the middle seat 2, which can avoid the occurrence of the situation of alignment deflection, In addition, such fixing mode does not need to be connected through viscose, without baking and curing, and the mounting mode is simple, whereby rapid mounting can be achieved, and the purpose of quickly, accurately, and firmly fixing the BOSA device 1 on the PCB board 3 can be achieved.

The foregoing embodiments are merely preferred embodiments of the present disclosure, and are not intended to limit the present disclosure, any modifications, equivalent replacements, improvements, etc. made within the spirit and principles of the present disclosure shall be included within the scope of protection of present disclosure.

## Claims

1. A BOSA device assembling apparatus, **characterized in** comprising: a BOSA device (1) and a middle seat (2),
wherein the BOSA device (1) comprises a base, the base comprising a first side surface (11) and a second side surface (12) which are oppositely set, a first boss (13) being set on the first side surface (11), and a second boss (14) being set on the second side surface (12);
the middle seat (2) comprises a bottom plate (23), a first limiting arm (21), and a second limiting arm (22), the first limiting arm (21) and the second limiting arm (22) being both set on the bottom plate (23), and the first limiting arm (21) and the second limiting arm (22) being oppositely set, the bottom plate (23), the first limiting arm (21) and the second limiting arm (22) forming a mounting space, wherein a first snap-fit hole (211) is set on the first limiting arm (21), and a second snap-fit hole (221) is set on the second limiting arm (22);
the bottom plate (23) is further provided with at least one protruding pin (231) which is set on a side facing away from the first limiting arm (21), and is used to be fixed in the positioning hole (31); and
the base is set in the mounting space, and the first boss (13) is snap-fitted to the first snap-fit hole (211), the second boss (14) is snap-fitted to the second snap-fit hole (221), so as to fix the BOSA device (1) on the middle seat (2).

2. The BOSA device assembling apparatus of claim 1, **characterized in that** two of the first bosses (13) are set on the first side surface (11);
a first groove (15) is set on the first side surface (11), the first boss (13) being set within the first groove (15), the two first bosses (13) being respectively set at two ends of the first groove (15);
a second groove (16) is set on the first side surface (12), the second groove (14) being set within the second groove (16), and being set in a middle area of the second groove (16);
a length of the second boss (14) is greater than a length of the first boss (13).

3. The BOSA device assembling apparatus of claim 2, **characterized in that** the middle seat (2) comprises two first limiting arms (21) and one second limiting arm (22), the two first limiting arms (21) being set on the same side and are set at two ends of the bottom plate (23); and the second limiting arm (22) is set in a middle area of the bottom plate (23).

4. The BOSA device assembling apparatus of claim 1, **characterized in that** a first notch (232) and a second notch (233) are set on the bottom plate (23), wherein the first notch (232) is set adjacent to the first limiting arm (21), and a length of the first notch (232) is greater than a length of the first limiting arm (21); and the second notch (233) is set adjacent to the second limiting arm (22), and a length of the second notch (233) is greater than a length of the second limiting arm (22).

5. The BOSA device assembling apparatus of claim 4, **characterized in that** the assembling apparatus is further set with a disassembling and returning member (5) in a matching mode, wherein the disassembling and returning member (5) comprises an operating arm (52) and a disassembling arm (51), and a disassembling groove (511) and a movable portion (512) are set on the disassembling arm (51); and the disassembling groove (511) is used for coupling with the first limiting arm (21), and the movable portion (512) is inserted into the first notch (232);
when the operating arm (52) receives an external force, the disassembling groove (511) abuts against a side surface of the first limiting arm (21), and the movable portion (512) moves in the first notch (232), so that the first boss (13) is separated from the corresponding first snap-fit hole (211).

6. The BOSA device assembling apparatus of claim 5, **characterized in that** a protrusion (513) is set between the disassembling groove (511) and the movable portion (512);
wherein a first cambered surface (514), a second cambered surface (515) and a third cambered surface (516) are set on the disassembling arm (51), wherein the first cambered surface (514) is connected to the second cambered surface (515) to form the disassembling groove (511), and the second cambered surface (515) and the third cambered surface (516) are connected with each other to form the protrusion (513); and
the second cambered surface (515) is inclined to a plane where the movable portion (512) is located, and an angle between the first cambered surface (514) and the second cambered surface (515) is 80°~120°.

7. The BOSA device assembling apparatus of claim 1, **characterized in that** the first boss (13) and the second boss (14) each have an abutting surface (141) and a guide surface (142), the abutting surface (141) being parallel to the upper surface of the base, the guide surface (142) being inclined to the abutting surface (141), and in a direction close to the middle seat (2), a distance between the guide surface (142) and the base being gradually reduced.

8. The BOSA device assembling apparatus of claim 1, **characterized in that** a first inclined surface (212) is set on the first limiting arm (21), is located on an inner side of the first limiting arm (21), and is set above the first snap-fit hole (211); and
a second inclined surface is set on the second limiting arm (22), is located on an inner side of the second limiting arm (22), and is set above the second snap-fit hole (221).

9. A mounting method of a BOSA device assembling apparatus, **characterized in that** the mounting method is applied to the BOSA device assembling apparatus according to any one of claims 1-8, and the mounting method comprises:
fixing the middle seat (2) on the PCB board (3);
snap-fitting the first boss (13) on the BOSA device (1) in the first snap-fit hole (211), and snap-fitting the second boss (14) on the BOSA device (1) in the second snap-fit hole (221), so as to fix the BOSA device (1) on the middle seat (2).

10. The mounting method of a BOSA device assembling apparatus of claim 9, **characterized in that** the fixing the middle seat (2) on the PCB board (3) comprises:
fixing the middle seat (2) on the PCB board (3) after the protruding pin (231) passes through the positioning hole (31); and
the snap-fitting the first boss (13) on the BOSA device (1) in the first snap-fit hole (211), and snap-fitting the second boss (14) on the BOSA device (1) in the second snap-fit hole (221), so as to fix the BOSA device (1) on the middle seat (2), comprises:
snap-fitting the first boss (13) on the BOSA device (1) in the first snap-fit hole (211) to make the first limiting arm (21) partially enter the first groove (15), and snap-fitting the second boss (14) on the BOSA device (1) in the second snap-fit hole (221) to make the second groove (16) be filled by the second limiting arm (22), so as to fix the BOSA device (1) on the middle seat (2).

11. The mounting method of a BOSA device assembling apparatus of claim 9, **characterized in that** the BOSA device has been welded with the FPC board before the middle seat is fixed, or,
the BOSA device (1) completes welding with the FPC board (4) after the middle seat (2) is fixed.

12. The mounting method of a BOSA device assembling apparatus of claim 11, **characterized in that**
the BOSA device (1) being welded with the FPC board (4), comprises:
respectively welding two mounting portions (41) of the FPC board (4) with a transmitting optical sub-assembly and a receiving optical sub-assembly of the BOSA device (1); and
welding a positioning welding pad on the FPC board (4) with a positioning welding pad on the PCB board (3), and welding a signal welding pad on the FPC board (4) with a corresponding signal welding pad on the PCB board (3).
